# EUROPEAN PATENT APPLICATION

(11) **EP 2 590 045 A1**
(43) Date of publication of application: **08.05.2013**
(21) Application number: 11008773.1
(22) Date of filing: 03.11.2011
(51) Int. Cl.: G05D 23/19, G05B 17/02

(54) **A method for setting parameters in a system, in particular a heating or cooling system, device to change parameters, and heating or cooling system**

(71) Applicant: Danfoss A/S, 6430 Nordborg (DK)
(72) Inventor: Dinesen Villekjaer, Jesper, 7080 Börkop (DK); Lundholm Gregersen, Jakob, 7100 Vejle (DK)
(74) Representative: Knoblauch, Andreas

(57) **Abstract**

A method for setting parameters in a system, in particular a heating or cooling system is provided.

To simplify the setting of parameters in such a system, said method comprises
using a virtual system (100), said virtual system (100) being an image of a real system (1),
setting said parameters in one of said virtual and real system (100, 1),
generating a condensed code, said code containing information about said parameters of said virtual or real system (100, 1),
outputting said code,
inputting said code in the other one of said real and
virtual system (1, 100),
decoding said code in said real or virtual system (1, 100), respectively, to set said parameters of said real or virtual system (1, 100), respectively, in accordance with the set parameters of said virtual or real system (100, 1), respectively.

## Description

The present invention relates to a method for setting parameters in a system, in particular a heating or cooling system. Furthermore, the present invention relates to a device arranged to change parameters in a system, in particular a heating or cooling system. Finally, the present invention relates to a heating or cooling system.

A heating or cooling system or any other system influencing the ambient conditions, e.g. an air flow or the like, generally has a number of elements which can be operated. Furthermore, such a system often has the possibility to be operated in a time-programmed manner. To this end, a clock is provided. Furthermore, such a system comprises one or more sensors to get some information required for the operation of said system. Some of these elements comprise parameters which can be set to desired values to adapt the system to certain requirements.

In many cases, the operation or the setting of parameters of one element changes the behavior or the effect of another element. The mutual dependency of these elements makes it in some cases difficult to set parameters of the elements correctly.

The task underlying the invention is to simplify the setting of parameters in a system, in particular a heating or cooling system.

This task is solved with a method for setting parameters in a system, said method comprising using a virtual system, said virtual system being an image of a real system, setting said parameters in one of said virtual and real system, generating a condensed code, said code containing information about said parameters of said virtual or real system, outputting said code, inputting said code in the other one of said real or virtual system, decoding said code in said real or virtual system, respectively, to set said parameters of said real or virtual system, respectively, in accordance with the set parameters of said virtual or real system, respectively.

The invention will be explained with help of an example, in which the parameters are set in the virtual heating or cooling system. However, in will be clear that the parameters can be set as well in the real heating or cooling system and the condensed code can be outputted to be inputted afterwards into the virtual heating or cooling system, e.g. for checking whether the parameters have been set correctly. Furthermore, the invention is illustrated in connection with a heating or cooling system.

However, the invention can be used in any other system influencing environmental parameters, like a ventilation system, a humidification system, a shading system against sunlight, and so on.

The virtual heating or cooling system is an image of the real heating or cooling system in which the parameters should be set. The parameters comprise not only the actual operational parameters, although in many cases this would be sufficient. The parameters comprise as well information about the room to be heated or cooled (or influenced otherwise), the size of other heating or cooling sources, the local climate. In other words, all parameters can be taken in account, which have a dynamic effect when changing operational parameters. Furthermore, if necessary or desired, historical data can be taken into account. The virtual heating or cooling system can easily show the dependencies between the respective elements of the real heating or cooling system. Therefore, it is easy for an installer to see the outcome if he changes one or more parameters. Therefore, the setting of the parameters can be made without greater difficulties. If an error occurs, the virtual heating or cooling system can output a warning. It is also possible that the virtual heating or cooling system has additional display facilities in order to show the reaction of parts of the system or of the whole system depending on a change in one or more parameters. Once the parameters have been set in the virtual heating or cooling system, these parameters are condensed to a code. This code is outputted. In the simplest form the output can be made via a display. In a more comfortable way the output can be made via a printer or the like or it can be made to be readably by a smartphone or the like. In a most comfortable way the output can be made by a wireless transmission directly to the real heating or cooling system in which the parameters should be set. The condensed code contains information about the set parameters. In an ideal case the condensed code contains the information about all set parameters. When this condensed code is inputted into the real heating or cooling system, the real heating or cooling system can decode this code and use the decoded information to set the own parameters. This is a simpler way to set the parameters in the real heating or cooling system then to transfer each parameter with its specific value from the virtual system to the real system. The method can be used as well to read out the information from the real heating or cooling system in form of a condensed code and to transfer this condensed code into a virtual heating or cooling system, said system being an image of said real heating or cooling system. The installer can see at the first glance whether parameters have been set incorrectly. He then can correct these parameters and transfer the information the other way round by outputting the condensed code from the virtual heating or cooling system and inputting the condensed code having the correct parameter setting into the real heating or cooling system.

Preferably, said code is a sequence of digits and/or letters. In principle, all alphanumeric signs including ".", ",", "+", and so on can be used. This has the advantage that a large number of elements are available to produce the code. In this case, the code itself can be kept short. Furthermore, the code is legible for an installer.

Preferably, said virtual heating or cooling system is used on a computer. The virtual heating or cooling system can be stored on a computer. It is also possible to create said virtual heating or cooling system on a computer by using pre-defined elements.

Preferably, said computer is accessed via the internet. In this case, the virtual heating or cooling system is available at a central position, e.g. at the supplier of the heating or cooling system. The computer can have the relevant information of the heating or cooling system. Since it is not necessary to use a local computer, like a personal computer or a laptop, the computing power is not limited.

Preferably, said code is inputted into said real or virtual heating or cooling system, respectively, via a keyboard or a touch screen. A keyboard or touch screen has the possibility to input all alphanumeric signs available. The touch screen can be displayed on a display so that there is no necessity for the use of an external keyboard.

The task is solved with a device arranged to display a virtual heating or cooling system, said device comprising input means arranged to change parameters in said virtual heating or cooling system, said device comprising a coding section, said coding section generating a condensed code, said code containing information about said parameters, said device comprising output means arranged to output said code.

As mentioned above, it is possible to set all parameters of the real heating or cooling system in the virtual heating or cooling system which is displayed on the device. This device can be a computer or the like. It is possible to change parameters of the virtual heating or cooling system. In this case it is advantageous to show the effect of such a change and to create warning messages, when a change of a parameter leads to a situation which is not desired. Usually, the virtual heating or cooling system can react much faster than a real heating or cooling system, since the thermal time constant has not to be taken into account or can be made small. Therefore, the virtual heating or cooling system can simulate the real heating or cooling system, so that the installer can check rather fast whether the setting is correct or not. As soon as he has found a correct or desired setting, he can output the condensed code which contains the information of the parameters in the virtual heating or cooling system. This code can be inputted into the real heating or cooling system to set the parameters in this heating or cooling system. A further advantage can be achieved, when a number of heating or cooling systems having the same parameters have to be set for the first time. In this case it is only necessary to create the code once. This code can then be inputted in the number of real heating or cooling systems. An example is the construction of a building having a number of apartments which are equal to each other. In this case, all apartments can be heated or cooled according to the same programme which is inputted in each heating or cooling system using the same code.

Preferably, said input means and/or said output means are arranged remote from said device. In this case, the code and the settings of the virtual heating or cooling system are transferred over a distance which causes no problem.

Preferably, the device comprises an internet-connection. In this case, the internet can be used to transmit the code from the virtual heating or cooling heating to the display or to transmit the setting from the input to the virtual heating or cooling system.

The task is solved in a real heating or cooling system comprising a plurality of parameters, said parameters being adjustable by means of control means, said control means comprising an input device arranged to have inputted a code, said code containing information about a desired setting of said parameters, said control means further comprising decoding means arranged to decode said code and to set said parameters.

As mentioned above, in order to set the parameters in this real heating or cooling system is only necessary to input the code which was previously produced in connection with a virtual heating or cooling system being an image of said real heating or cooling system. The only thing the real heating or cooling system has to do is to decode this code and to use the result of the decoding to set the parameters. This action can be performed by control means having a processor or the like having access to the elements of the heating or cooling system the parameters of which should be changed or adjusted.

Preferably, said input means comprise a keyboard or a touch screen. In this case, a code can be used which is made of a sequence of alphanumeric signs, like digits, letters, and the like.

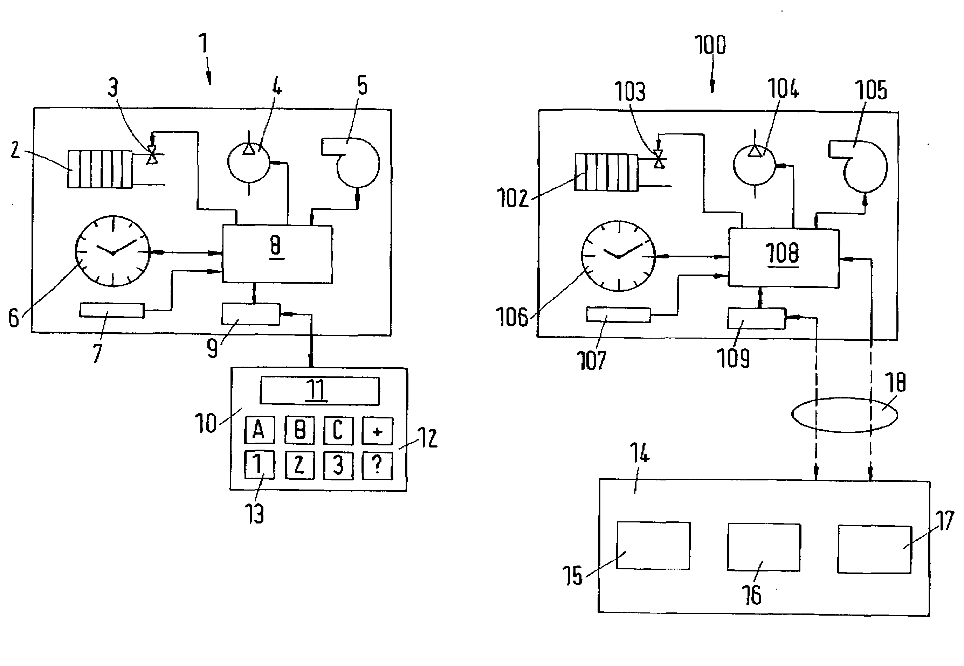

A preferred embodiment of the invention is shown with more details in the drawing, in which the

Only Figure shows a real and a virtual heating system.

The invention is explained in the following in connection with a heating system. It is clear that the invention can be used as well with a cooling system.

A real heating system 1 comprises a number of elements, among others a radiator 2, said radiator 2 having a controlled valve 3, a pump 4, and a burner 5. Furthermore, the real heating system 1 comprises a clock 6. The real heating system 1 comprises a temperature sensor 7. Finally the real heating system 1 comprises a processor 8 controlling the valve 3, the pump 4, and the burner 5. Such a control can be made depending on signals of the clock 6 and of the temperature sensor 7.

The elements listed above are chosen by way of example. It is clear for one skilled in the art that a real heating system 1 can comprise more elements, for example more than the radiator 2 shown, or other kind of heat exchangers. In addition to the temperature sensor 7 a further temperature sensor can be provided sensing an outdoor temperature. The real heating system 1 comprises a decoder 9 connected to the processor 8. The decoder 9 can also be used for coding information into a code as will be explained later.

The decoder 9 can be or is connected to an input means 10. Said input means 10 comprises a display 11 and a keyboard 12, said keyboard 12 having a number of keys 13. In the embodiment shown the keyboard 12 has eight keys 13 carrying the alphanumeric signs A, B, C, +, 1, 2, 3, ?. However, it is clear that more keys 13 can be provided and that in practice every alphanumeric sign can be used for each key including upper-case and lower-case letters. It is furthermore clear that the keys 13 can be displayed on a display in order to form a touch screen.

A virtual heating system 100 is configured to be an image of the real heating system 1. Therefore, the virtual heating system 100 comprises the same elements as the real heating system 1. These elements are shown with the same reference numerals plus 100 as in the real heating system 1.

The virtual heating system 100 is configured on a device, for example a computer which is able to simulate the real heating system 1 in a virtual world.

The virtual heating system 100 is connected to input and output means 14. These input and output means 14 comprise a keyboard 15, a display 16, and a printer 17. The keyboard 15 and the display 16 can be combined to form a touch screen. Instead of a keyboard 15 other possibilities can be used to input parameter settings into the virtual heating system 100, like switches, adjusting knobs, potentiometers, and the like. Of course, it is possible to combine the keyboard 15 with the mentioned switches, turning knobs, potentiometers, and the like.

The input and output means 14 can be positioned remote from the virtual heating system 100. A connection 18 between the virtual heating system 100 and the input and output means 14 can be made via the internet, for example.

The input and output means 14 are used to set or adjust parameters in the virtual heating system 100. To this end, signals transmitting the adjustment can be sent directly to the processor 108, or they can be sent via the coding/decoding means 109 to the processor 108.

A simple example for the setting of parameters is the creation of a temperature-time-programme. On week days, the set temperature for a room heated by the radiator 102 is set to 18°C in the time between 8 o'clock in the morning and 18 o'clock in the evening. The temperature is set to 20°C in the time between 6 o'clock and 8 o'clock and in the time between 18 o'clock and 22 o'clock. The temperature is set to 16°C in the time between 22 o'clock and 6 o'clock. For the weekend, the temperature is set to 20°C between 6 o'clock and 22 o'clock and to 16°C in the remaining time.

The result of such a setting can be displayed in the display 16.

A more complicated parameter setting can involve controlling of the burner 105 depending on the outdoor temperature in combination with the volume flow of the heating fluid created by the pump 104 of the virtual heating system 100. The results of such settings can be displayed as well in the display 16 so that an installer can easily check whether the settings are correct or desired or not.

As soon as all parameters have been set, the parameters are coded in a condensed code via the coder/decoder 109 of the virtual heating system 100. The code can have the form of a sequence of alphanumeric signs. Usually, more than 75 different signs are available (including lower-case and upper-case letters, digits and punctuation marks). A code having a sequence of five signs can represent more than two Billion different parameter combinations of the virtual heating system 100.

The code generated by the coder/decoder 109 is transmitted to the input and output means 14 and printed out by the printer 17. Alternatively, it can be outputted to a USB stick or the like or it can be transmitted wireless to the other system.

The codes can have the form of barcodes, QR tags or the like. In this case the installer only needs a suitable equipment to read such codes, like a smartphone.

The installer can use the output of the printer 17 to input the code generated by the virtual heating system 100 into the input means 10 of the real heating system 1. This code is decoded by the decoder 9. The result of this decoding is inputted into the processor 8 which can set the parameters of all elements of the real heating system 1 so that the real heating system 1 has the same parameter settings as the virtual heating system 100.

If an installer would like to check the parameter settings in the real heating system 1, the decoder 9 is used to condense the settings of the real heating system 1 into a condensed code which is outputted over the display 11. The installer can then input this code into the input and output means 14 of the virtual heating system 100. The parameters of the virtual heating system 100 are set to correspond to the parameters of the real heating system 1. The installer can easily check whether the settings comply with requirements. If they do so, nothing has to be done further. If the parameters do not meet the requirements, the parameters can be changed and a new code is generated which is outputted via the printer 17 and then inputted via the input means 10 of the real heating system 1.

## Claims

1. A method for setting parameters in a system, in particular a heating or cooling system, said method comprising
using a virtual system (100), said virtual system (100) being an image of a real system (1),
setting said parameters in one of said virtual and real system (100, 1),
generating a condensed code, said code containing information about said parameters of said virtual or real system (100, 1),
outputting said code,
inputting said code in the other one of said real and virtual system (1, 100),
decoding said code in said real or virtual system (1, 100), respectively, to set said parameters of said real or virtual system (1, 100), respectively, in accordance with the set parameters of said virtual or real system (100, 1), respectively.

2. The method according to claim 1, **characterized in that** said code is a sequence of digits and/or letters.

3. The method according to claim 1 or 2, **characterized in that** said virtual system is used on a computer.

4. The method according to claim 3, **characterized in that** said computer is accessed via the internet (18).

5. The method according to any of claims 1 to 4, **characterized in that** said code is inputted into said real or virtual system (1, 100), respectively, via a keyboard (12, 15) or a touch screen.

6. A device arranged to display a virtual system, in particular a heating or cooling system, said device comprising input means (14) arranged to change parameters in said virtual system (100), said device comprising a coding section (109), said coding section (109) generating a condensed code, said code containing information about said parameters, said device comprising output means (17) arranged to output said code.

7. The device according to claim 6, **characterized in that** said input means and/or said output means (17) are arranged remote from said device.

8. The device according to claim 6 or 7, **characterized in that** it comprises an internet-connection.

9. A real heating or cooling system (1) comprising a plurality of parameters, said parameters being adjustable by means of control means (8), said control means comprising an input device (10) arranged to have inputted a code, said code containing information about a desired setting of said parameters, said control means (8) further comprising decoding means (9) arranged to decode said code and to set said parameters.

10. The heating or cooling system according to claim 9, **characterized in that** said input means (10) comprise a keyboard (12) or a touch screen.
